# EUROPEAN PATENT SPECIFICATION

(11) **EP 2 737 737 B1**
(45) Date of publication and mention of the grant of the patent: **02.05.2018**
(21) Application number: 12750834.9
(22) Date of filing: 25.07.2012
(51) Int. Cl.: H04W 8/00

(54) **COMMUNICATION APPARATUS, COMMUNICATION METHOD, AND COMMUNICATION PROGRAM FOR REDUCING CURRENT CONSUMPTION DURING A PERIOD OF A MASTER APPARATUS DETECTION PROCESS**
KOMMUNIKATION VORRICHTUNG, KOMMUNIKATIONSVERFAHREN UND KOMMUNIKATIONSPROGRAMM ZUR REDUKTION DES STROMVERBRAUCHS WÄHREND DER DETEKTION EINER MASTER-VORRICHTUNG
APPAREIL DE COMMUNICATION, PROCÉDÉ DE COMMUNICATION ET PROGRAMME DE COMMUNICATION POUR RÉDUIRE LA CONSOMMATION DE COURANT DURANT UNE PÉRIODE DE PROCESSUS DE DÉTECTION D'APPAREIL MAÎTRE

(30) Priority: 26.07.2011 JP 2011163703
(43) Date of publication of application: 04.06.2014
(73) Proprietor: Panasonic Corporation, Osaka 571-8501 (JP)
(72) Inventor: SUZUKI, Takashi, Osaka 540-6207 (JP); ITO, Takatsugu, Osaka 540-6207 (JP); YOSHIDA, Kouji, Osaka 540-6207 (JP); OHBUCHI, Ken, Osaka 540-6207 (JP); SUGITANI, Toshiyuki, Osaka 540-6207 (JP)
(74) Representative: Eisenführ Speiser
(86) International application number: PCT/JP2012/069527
(87) International publication number: WO 2013/015447

(56) References cited:
- US-A1- 2005 148 298
- US-A1- 2009 240 781
- US-B1- 6 622 011

## Description

### Technical Field

The present invention relates to a communication apparatus, a communication system, a communication method, and a radio communication program.

### Background Art

US 6,622,011B1 discloses an improved paging procedure for use in a low power radio communications network. A transceiver which pages a device by periodically transmitting a series of messages, comprises a transmitter which transmits a series of messages comprising a message at each frequency in a predetermined series of frequencies, a receiver which receives at, at least a predetermined frequency; and a controller which enables the transmitter and then the receiver in each of a plurality of successive periods and provides each message in said series of messages. The predetermined series of frequencies is an ordered series. A first message in the series of messages transmitted in a period defines directly or indirectly when the receiver is enabled and a second message in the series, a mark code, directly defines the predetermined frequency.

Hitherto, communication has been performed in conformity with various communication schemes. A TDMA (Time Division Multiple Access) scheme in which a plurality of communication apparatuses communicate with each other alternately in a very short time at the same frequency is known as one of the communication schemes.

In the TDMA scheme, a radio wave with the same frequency band is divided on a time axis and the divided times (slots) are allocated to the plurality of communication apparatuses and are multiplexed. A gap called a guard time is provided between the slots to prevent transmission processes of the communication apparatuses from overlapping due to a deviation in transmission timing. A communication apparatus utilizing the TDMA scheme communicates with another communication apparatus by using a frame that includes a predetermined number of slots and a predetermined number of guard times as one unit.

In the TDMA scheme, since a plurality of communication apparatuses have to recognize the same time, it is necessary to achieve synchronization between the plurality of communication apparatuses. Hitherto, as a technique for achieving synchronization between a plurality of communication apparatuses, a transmission apparatus is known which transmits synchronization data having a pattern, which does not exist in data which can be transmitted normally during a period of a section of one slot in which data different from the synchronization data is transmitted, when data to be transmitted is not present (for example, see PTL 1). Further, a frame synchronization circuit is known which uses reception modulation scheme information indicating a burst modulation scheme or part of the reception modulation scheme information as part of a synchronization word located before the reception modulation scheme information (for example, see PTL 2). An error synchronization prevention algorithm is known which does not continuously transmit channel control data but alternately transmits the channel control data and dummy data when synchronization is achieved in a radio communication apparatus using a time division transmission and reception communication scheme.

### Citation List

### Patent Literature

[PTL 1] JP-A-H9-23203
[PTL 2] JP-A-H9-307541
[PTL 3] JP-A-2003-78471

### Summary of Invention

### Technical Problem

A cordless telephone apparatus mainly used at home is present in one communication apparatus that performs communication in conformity with the TDMA scheme. In a cordless telephone apparatus system, communication is performed between a master apparatus and a slave apparatus in conformity with a digital cordless telephone standard (ETSI: European Telecommunication Standards Institute) called DECT (Digital Enhanced Cordless Telecommunication).

The master and slave apparatuses perform a registration process in advance before communication starts between the master and slave apparatuses. In the registration process, the master and slave apparatuses exchange identification IDs with each other and keep the identification IDs. Further, when the communication starts between the master and slave apparatuses, the slave apparatus searches for a frequency used for the master apparatus to transmit transmission control data on a communication line. Since the plurality of frequencies are present, the slave apparatus detects whether the control data of the master apparatus is present at the frequency, for example, in a low order of the frequencies (for example, in the order of the frequencies F0 → F1 → F2 → F3 → F4) (master apparatus detection process). Then, the slave apparatus can recognize the master apparatus subjected to the registration process, referring to the identification ID of the master apparatus detected through the master apparatus detection process. When the identification ID of the master apparatus is different, the master apparatus detection process is performed again.

When the completion time (corresponding to a time necessary until the start of synchronization) of the master apparatus detection process is shortened, current consumption between the master and slave apparatuses is small. However, the current consumption may increase due to the control data in some cases in the following circumstances.

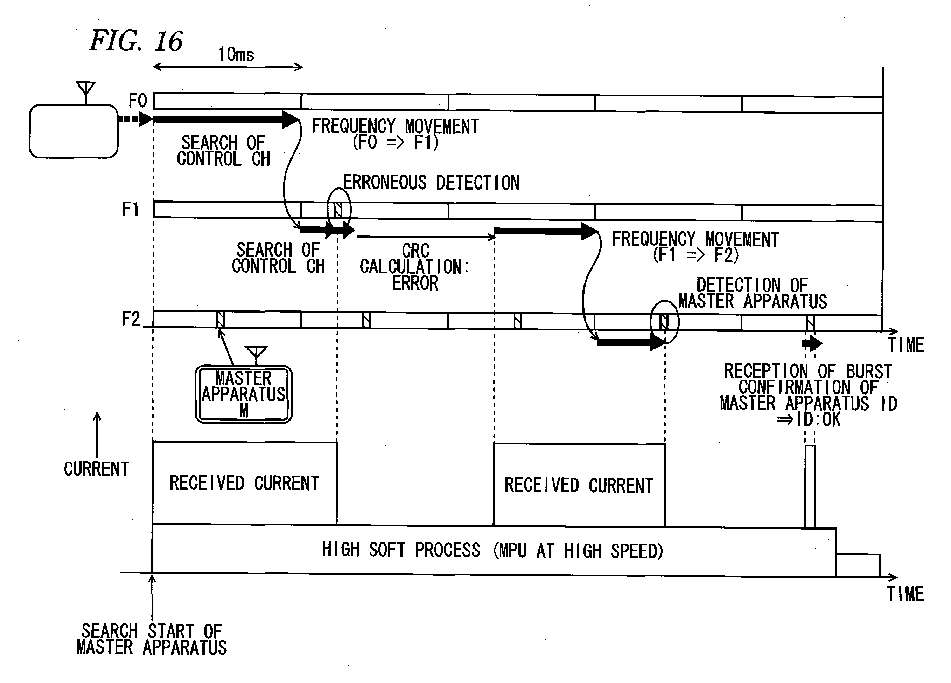

Fig. 16 is a diagram illustrating a first example of the master apparatus detection process performed by the slave apparatus. In the example shown in Fig. 16, a registration process is performed between a slave apparatus S and a master apparatus M, and a frequency (control CH) used to transmit control data transmitted by the master apparatus M is, for example, a frequency F2. In Fig. 16, the slave apparatus S first starts a searching process of detecting the master apparatus M from the frequency F0, and a signal (for example, noise) close to the control data of the master apparatus M is incidentally detected at a frequency F1 subsequent to a frequency F0. The slave apparatus S performs an error detection process of determining whether the detected control data is the control data of the regular master apparatus M. When the slave apparatus S determines that the detected control data is not the control data of the regular master apparatus M, the slave apparatus S starts the master apparatus detection process again at the frequency F1. In this case, since the searching process is interrupted during the error determination process, the time is lengthened until the detection of a regular master apparatus M1. For this reason, the current consumption may increase.

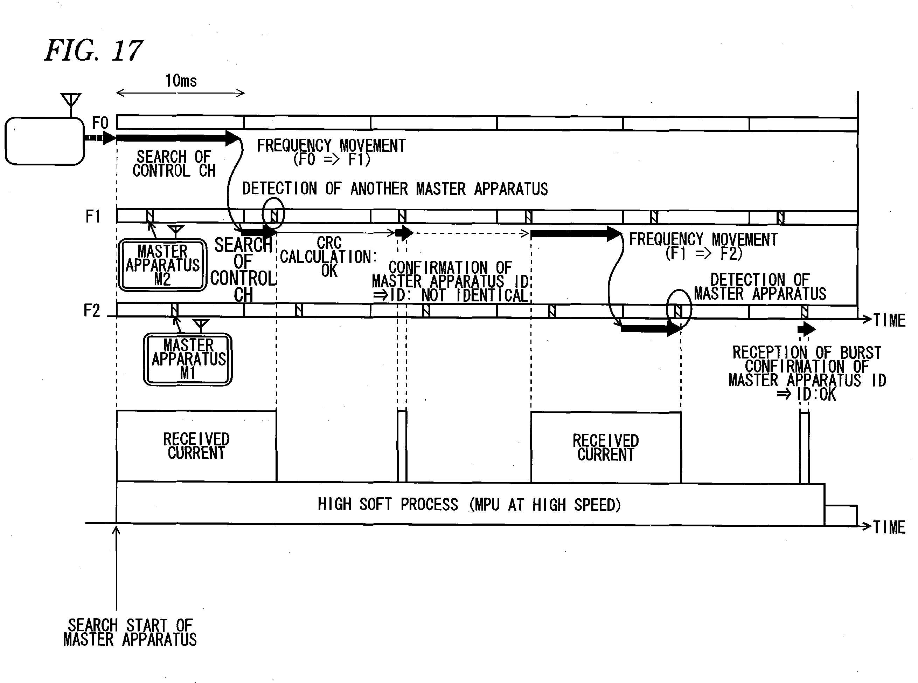

Fig. 17 is a diagram illustrating a second example of the master apparatus detection process performed by the slave apparatus. In the example shown in Fig. 17, the slave apparatus S performs the registration process on the master apparatus M1 and the master apparatus M1 transmits control data at the frequency F2. In the example shown in Fig. 17, the slave apparatus S starts the searching process of detecting the master apparatus from the frequency F0. At the frequency F1 subsequent to the frequency F0, control data of a master apparatus M2 different from the master apparatus M1 subjected to the registration process is incidentally detected. The slave apparatus S checks an identification ID of the received control data to determine whether this control data is not the control data of the master apparatus M1 which is the master of this slave apparatus S. After determining an error, the slave apparatus S starts the master apparatus detection process again at the frequency F1. Even in this case, the searching process is interrupted until an error is determined. When determining the error, the slave apparatus S starts the master apparatus detection process again at the frequency F1. Thus, since the time is lengthened until the detection of the regular master apparatus M1, the current consumption may increase.

The invention is devised in light of the above-described circumstances and an object of the invention is to provide a communication apparatus, a communication system, a communication method, and a communication program capable of reducing current consumption during a period of a master apparatus detection process.

### Solution to Problem

A communication apparatus of the present invention as defined in claim 1.

With such a configuration, the current consumption can be reduced during the period of the master apparatus detection process by reflecting the result of the master apparatus detection process on the number of bits of the signal pattern.

In the communication apparatus of this invention, the control unit controls the number of bits of the signal pattern used for the master apparatus detection process based on the number of times the master apparatus detection unit erroneously detects the communication apparatus operating as the master apparatus.

With such a configuration, the current consumption can be reduced by shortening the period of the master apparatus detection process while maintaining the detection accuracy of the master apparatus.

In the communication apparatus of the present invention, the control unit increases the number of bits of the signal pattern used for the master apparatus detection process, when the number of times of the error detection is equal to or greater than a first predetermined number of times.

With such a configuration, since the number of bits of the pattern referred to in the master apparatus detection process and the probability that the noise pattern or the like is identical with the master apparatus pattern is lowered, the number of times of the error detection can be reduced, and the current consumption can thus be reduced.

In the communication apparatus of the present invention, the control unit decreases the number of bits of the signal pattern used for the master apparatus detection process, when the number of times of the error detection is less than a second predetermined number of times less than a first predetermined number of times.

With such a configuration, by reducing the number of bits of the pattern to be referred to in the master apparatus detection process, it is possible to reduce the probability that the master apparatus to be detected, for example, is not detected when the intensity of a radio wave is weak.

In the communication apparatus of the present invention, the control unit controls the number of bits of the signal pattern used in the master apparatus detection process, when the number of frames received by the communication unit is equal to or greater than a predetermined number of frames.

With such a configuration, the number of bits can be controlled only when the number of samples is sufficient. Therefore, the reliability of the control result is improved.

In the communication apparatus of the present invention, the control unit controls the number of bits immediately before the synchronization pattern among bits of the signal pattern.

With such a configuration, since the preamble pattern is the forefront pattern of a signal received in one slot, the reliability of bit information may be low. However, the reliability of the detection result in the master apparatus detection process is improved by using the bits of the rear portion of the preamble pattern in the master apparatus detection process.

The communication apparatus of the present invention, further comprises:
a sensor unit that detects predetermined information; and
a power control unit that controls powers of the communication unit, the master apparatus detection unit, and the control unit,
wherein the power control unit controls the communication unit, the master apparatus detection unit, and the control unit such that the powers of the communication unit, the master apparatus detection unit, and the control unit are turned on when the sensor unit detects the predetermined information, whereas controlling the master apparatus detection unit, the communication unit, and the control unit such that the powers of the master apparatus detection unit, the communication unit, and the control unit are turned off when the communication unit completes the communication with the communication apparatus operating as the master apparatus.

With such a configuration, the current consumption can be reduced in the power-down mode and the current consumption can be also reduced in the master apparatus detection process at each time. Thus, the current consumption other than the consumption necessary for the communication can be maintained as small as possible.

A communication system of the present invention comprises:
a first communication apparatus that operates as a first slave apparatus;
a second communication apparatus that operates as a second slave apparatus; and
a third communication apparatus that operates as a master apparatus,
wherein the first communication apparatus is a communication apparatus as defined in claim 1, and
wherein the second communication apparatus includes
a second communication unit that communicates a signal with another communication apparatus in conformity with the TDMA (Time Division Multiple Access), and
a second master apparatus detection unit that performs the master apparatus detection process of detecting the third communication apparatus using a synchronization pattern included in the signal received by the second communication unit.

With such a configuration, even when the first slave apparatus which controls the number of bits of the signal pattern and the second slave apparatus which does not control the number of bits are both present, the first slave apparatus can perform the master apparatus detection process with high accuracy. Thus, the current consumption can be reduced.

A communication method of the present invention is defined in claim 10.

According to this method, the current consumption can be reduced during the period of the master apparatus detection process by reflecting the result of the master apparatus detection process on the number of bits of the signal pattern.

A communication program of the present invention causes a computer to execute each step of the above mentioned communication method.

According to the program, the current consumption can be reduced during the period of the master apparatus detection process by reflecting the result of the master apparatus detection process on the number of bits of the signal pattern.

### Advantageous Effects of Invention

According to the aspects of the invention, it is possible to reduce the current consumption during the period of the master apparatus detection process.

### Brief Description of the Drawings

Fig. 1 is a diagram illustrating an example of the configuration of a communication system according to a first embodiment of the invention.
Fig. 2 is a diagram illustrating an example of the configuration of a slave apparatus (first slave apparatus) according to the first embodiment of the invention.
Fig. 3 is a diagram illustrating an example of the configuration of a slave apparatus (second slave apparatus) according to the first embodiment of the invention.
Fig. 4 is a diagram illustrating an example of the configuration of a master apparatus according to the first embodiment of the invention.
Fig. 5 is an image diagram illustrating current consumption when the slave apparatus (first slave apparatus) communicates with the master apparatus according to the first embodiment of the invention.
Fig. 6 is a diagram illustrating an example of the structure of a frame used for the communication between the master apparatus and the slave apparatus (first slave apparatus) according to the first embodiment of the invention.
Fig. 7 is a diagram illustrating the example of the structure of the frame used for the communication between the master apparatus and the slave apparatus (first slave apparatus) according to the first embodiment of the invention.
Fig. 8 is an image diagram illustrating a first priority example of the frequencies in communication of each communication system according to the first embodiment of the invention.
Fig. 9 is an image diagram illustrating a movement example of a control CH in each communication system according to the first embodiment of the invention.
Fig. 10 is an image diagram illustrating a second priority example of the frequencies in communication of each communication system according to the first embodiment of the invention.
Fig. 11 is an image diagram illustrating the frequencies in each communication system according to a modified example of the first embodiment of the invention.
Fig. 12 is a flowchart illustrating examples of operations of the slave apparatus (first slave apparatus) according to the first embodiment of the invention.
Fig. 13 is a flowchart illustrating examples of operations of the slave apparatus (first slave apparatus) according to the first embodiment of the invention (continue from Fig. 12).
Fig. 14 is a diagram illustrating an example of the configuration of a slave apparatus according to a second embodiment of the invention.
Fig. 15 is an image diagram illustrating current consumption when the slave apparatus communicates with a master apparatus according to the second embodiment of the invention.
Fig. 16 is a diagram illustrating a first example of a master apparatus detection process performed by a slave apparatus according to the related art.
Fig. 17 is a diagram illustrating a second example of the master apparatus detection process performed by the slave apparatus according to the related art.

### Description of Embodiments

Hereinafter, embodiments of the invention will be described with reference to the drawings.

### First Embodiment

Examples of communication systems according to this embodiment include a cordless telephone system, a sensor system using various sensors, and a system in which the cordless telephone system and the sensor system are linked. As the sensor system, for example, there is a system that detects a door opening or closing.

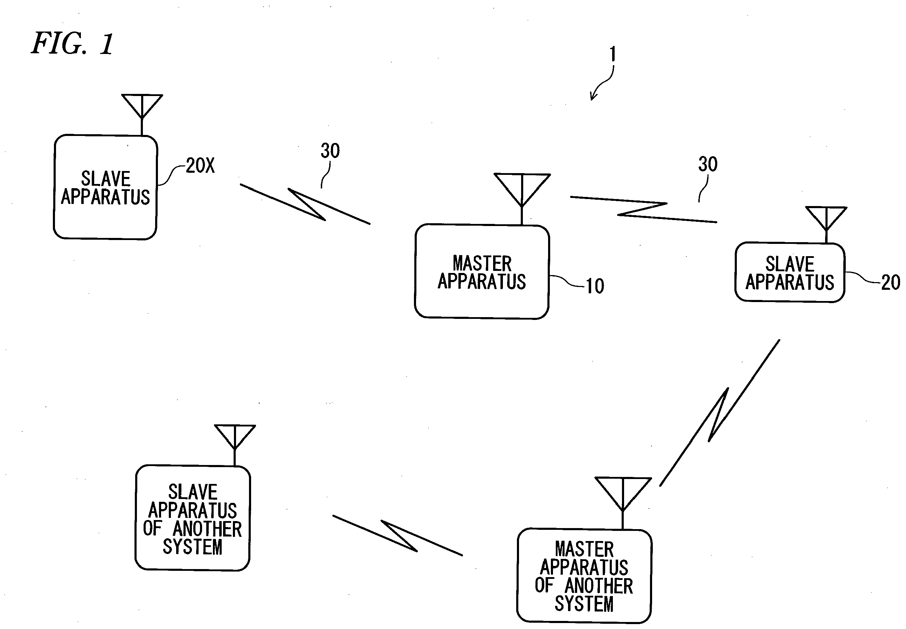

Fig. 1 is a diagram illustrating an example of the configuration of a communication system according to the embodiment of the invention. In a communication system 1 shown in Fig. 1, a communication apparatus 10 (hereinafter, simply referred to as a "master apparatus 10") that operates as a master apparatus and a communication apparatus 20 (hereinafter, simply referred to as a "slave apparatus 20") that operates as a slave apparatus including a sensor that detects a door opening or closing are connected to each other through a radio line 30. In some cases, a master apparatus or a slave apparatus of a communication system other than the communication system 1 exists in the vicinity of the communication system 1. Further, the plurality of slave apparatuses 20 are present. As shown in Fig. 1, the communication system 1 may include a slave apparatus 20X (second slave apparatus) that does not have a sensor function and has a normal telephone function in addition to the slave apparatus 20 (first slave apparatus). In the example of Fig. 1, the slave apparatus 20 including a sensor 260 and the slave apparatus 20X having a normal telephone function are already registered in the master apparatus 10.

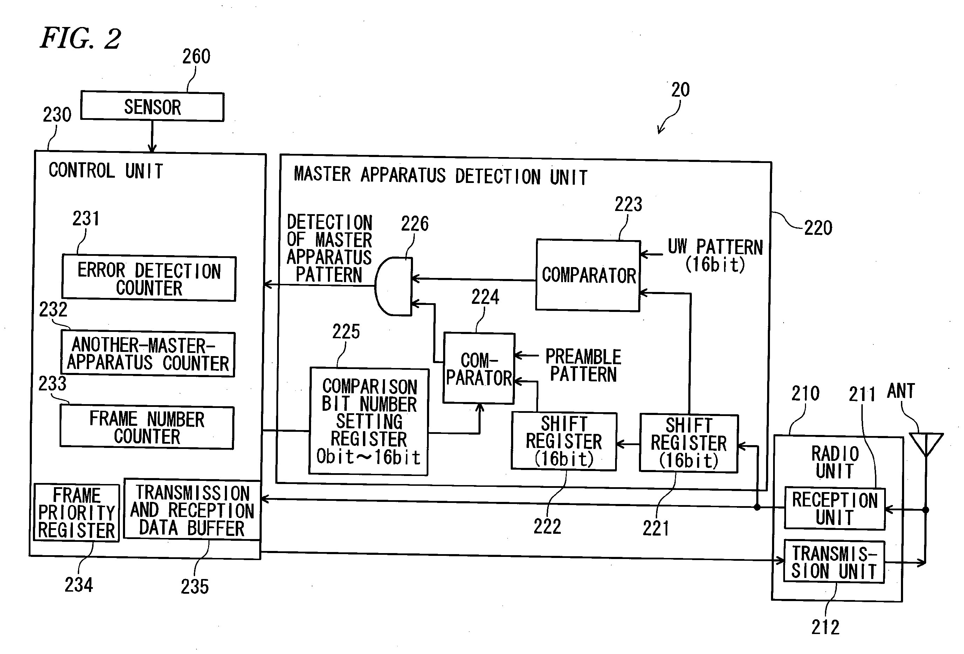

Fig. 2 is a diagram illustrating an example of the configuration of the slave apparatus 20 including a sensor.

The slave apparatus 20 includes a radio unit 210, a master apparatus detection unit 220, and a control unit 230, as shown in Fig. 2. The slave apparatus 20 further includes a sensor 260 that detects a door opening or closing. The details of the sensor 260 have the same as a sensor 260 to be described below according to a second embodiment.

The radio unit 210 communicates another communication apparatus through an antenna ANT in a frame unit including a plurality of slots in conformity with a TDMA scheme. The radio unit 210 includes a reception unit 211 and a transmission unit 212. The reception unit 211 receives a signal using half of the slots of one frame from the radio line 30. The transmission unit 212 transmits a signal to the radio line 30 using the other half of the slots of one frame to the radio line 30.

The master apparatus detection unit 220 is configured by an MPU (Micro Processing Unit) and performs a master apparatus detection process of detecting the master apparatus 10. The master apparatus detection unit 220 includes shift registers 221 and 222, comparators 223 and 224, a comparison bit number setting register 225, and a master apparatus pattern detection circuit 226.

When the reception unit 211 inputs data (signal) received in each slot, the shift register 221 shifts the data bit by bit at a predetermined timing and holds information. Here, the shift register 221 holds the information regarding a unique word pattern (UW pattern) of a data structure in one slot. The UW pattern is one synchronization pattern. Further, the UW pattern is assumed to have 16 bits, but any number of bits may be used.

When the reception unit 211 input data received in each slot, the shift register 222 shifts the data bit by bit at a predetermined timing and holds information. Here, the shift register 222 holds information regarding a preamble pattern of the data structure in one slot. The preamble pattern is one signal pattern existing before the synchronization pattern. Further, the preamble pattern is assumed to have 16 bits, but any number of bits may be used.

The comparator 223 compares the UW pattern held by the shift register 221 to the UW pattern held by the master apparatus detection unit 220 in advance. When both UW patterns are identical with each other as the comparison result, a predetermined signal indicating that both UW patterns are identical with each other is output.

The comparator 224 compares the preamble pattern held by the shift register 222 to the preamble pattern held by the master apparatus detection unit 220 in advance. When both preamble patterns are identical with each other as the comparison result, a predetermined signal representing that both preamble patterns are identical with each other is output.

The comparison bit number setting register 225 holds the number of bits used for the comparator 224 to compare the preamble patterns. The number of bits is determined by the control unit 230. The control unit 230 indicates which bits are used in the preamble pattern used for the master apparatus detection process together with the UW pattern. A number corresponding to the number of bits is held in the comparison bit number setting register 225.

The master apparatus pattern detection circuit 226 outputs a predetermined signal representing that a master apparatus pattern is detected, when both predetermined results are obtained through the comparison of the comparators 223 and 224.

That is, the master apparatus detection unit 220 performs the master apparatus detection process at least using the unique word pattern (UW pattern) of a signal received by the radio unit 210. Then, the master apparatus detection unit 220 determines that the master apparatus is detected, when the UW pattern of the signal received by the radio unit 210 and the predetermined number of bits of the preamble pattern, for example, the last half to be compared are identical with the preamble pattern held by the master apparatus detection unit 220 and the bits of the preamble pattern to be compared. Here, the master apparatus includes the master apparatus subjected to a registration process and a master apparatus not subjected to the registration process.

The control unit 230 is configured by an MPU (Micro Processing Unit) and performs various control processes. For example, the control unit 230 controls the master apparatus detection process performed by the master apparatus detection unit 220. Further, the control unit 230 performs the registration process performed between the master apparatus and the slave apparatus 20 through the radio unit 210. In this registration process, a master apparatus ID and a slave apparatus ID determined in advance are exchanged and stored in a memory. The control unit 230 determines whether the signal received by the radio unit 210 is a correct signal by detecting an error of the received signal. For example, a CRC code is used as an error detection code. The control unit 230 extracts the ID of the master apparatus included in the signal received by the radio unit 210 and determines whether the extracted ID of the master apparatus is identical with the ID of the regular master apparatus (which is the ID transmitted from the master apparatus in the registration process). The process of determining whether the ID of the master apparatus is identical with the ID of the regular master apparatus is one of the recognition processes of recognizing whether the master apparatus detected through the master apparatus detection process is the regular master apparatus.

The control unit 230 includes an error detection counter 231, an another-master-apparatus counter 232, a frame number counter 233, a frequency priority register 234, and a transmission and reception data buffer 235.

The error detection counter 231 detects the master apparatus pattern as the result of the master apparatus detection process performed by the master apparatus detection unit 220 and counts the number of times an error is detected through the error detection. The another-master-apparatus counter 232 detects the master apparatus pattern as the result of the master apparatus detection process performed by the master apparatus detection unit 220 and counts the number of times another master apparatus not subjected to the registration process is determined. The frame number counter 233 counts the number of frames subjected to the master detection process by the master apparatus detection unit 220.

The frequency priority register 234 holds information on the priority of the frequencies used for the master apparatus detection unit 220 to perform the master apparatus detection process. The transmission and reception data buffer 235 temporarily holds information on a signal received by the reception unit 211 and information on a signal transmitted by the transmission unit 212.

The control unit 230 realizes each function described in this embodiment when the MPU executes a communication program stored in a ROM or the like.

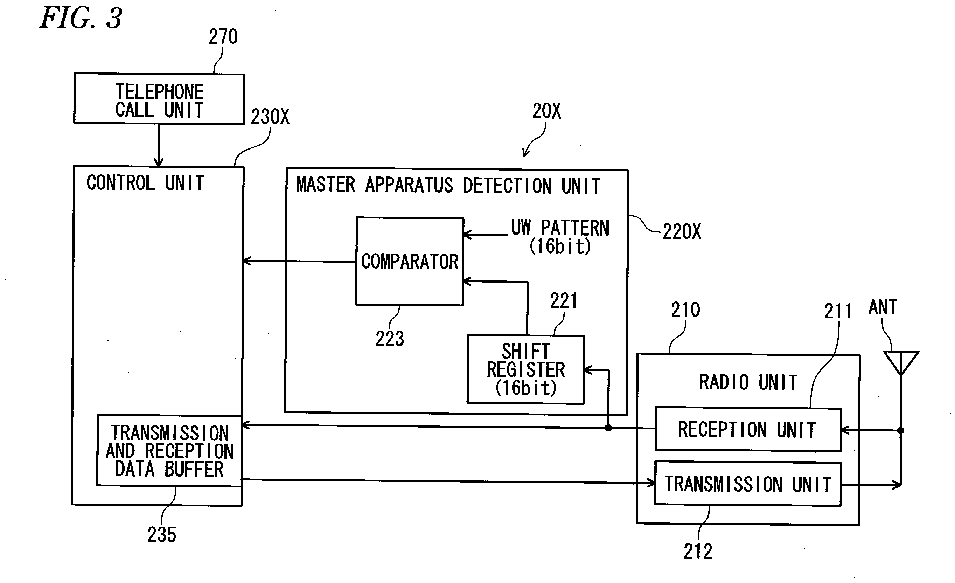

Fig. 3 is a diagram illustrating an example of the configuration of the slave apparatus 20X that has only a normal telephone function without having a sensor function.

As shown in Fig. 3, the slave apparatus 20X includes a radio unit 210, a master apparatus detection unit 220X, and a control unit 230X. Since the configuration of the radio unit 210 is the same as that of the slave apparatus 20, the description thereof will not be repeated.

The master apparatus detection unit 220X performs a master apparatus detection process and includes a shift register 221 and a comparator 223. The master apparatus detection unit 220X is different from the master apparatus detection unit 220 in that the master apparatus detection unit 220X performs the master apparatus detection process using only the UW pattern without using the preamble pattern.

The control unit 230X is configured by an MPU and performs various control processes. Further, the control unit 230X includes a transmission and reception data buffer 235. Reference Numeral 270 denotes a telephone call unit that has a voice telephone call function.

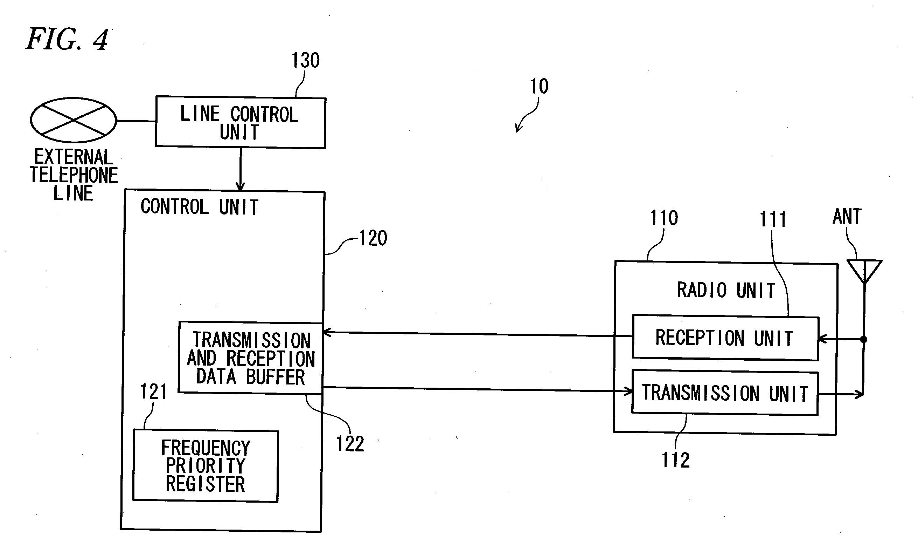

Fig. 4 is a diagram illustrating an example of the configuration of the master apparatus 10.

The master apparatus 10 includes a radio unit 110 and a control unit 120, as shown in Fig. 4.

The radio unit 110 communicates with another communication apparatus through an antenna ANT in a frame unit including a plurality of slots in conformity with the TDMA scheme. The radio unit 110 includes a reception unit 111 and a transmission unit 112. The reception unit 111 receives a signal using half of the slots of one frame from the radio line 30. The transmission unit 112 transmits a signal using the other half of the slots of one frame to the radio line 30.

The control unit 120 is configured by an MPU (Micro Processing Unit) and performs various control processes. The control unit 120 includes a frequency priority register 121 and a transmission and reception data buffer 122. Reference Numeral 130 denotes a line control unit that has an external telephone line connection function and a function of transmitting and receiving an audio signal.

The frequency priority register 121 holds information on the priority of the frequencies used for the communication unit 110 to communicate control data between the master apparatus 10 and the slave apparatus 20. The transmission and reception data buffer 122 temporarily holds data received in each slot by the reception unit 111 and data transmitted in each slot by the transmission unit 112.

The control unit 120 realizes each function described in this embodiment when an internal MPU executes a communication program stored in a ROM or the like.

Next, current consumption of the slave apparatus will be described.

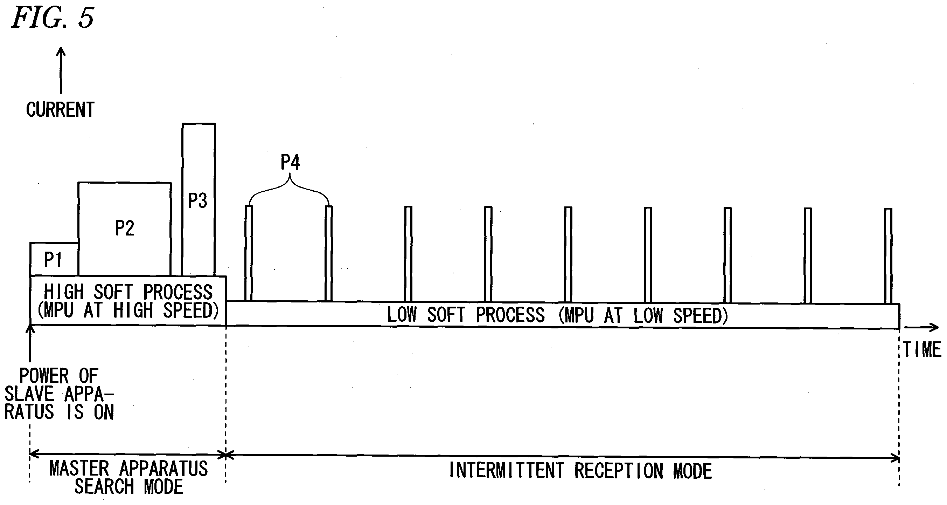

Fig. 5 is an image diagram illustrating current consumption when the slave apparatus (the slave apparatus 20X) having only the normal telephone function communicates with the master apparatus 10.

As shown in Fig. 5, the slave apparatus 20X first performs a process in a master apparatus search mode when the slave apparatus 20X starts communicating with the master apparatus 10. When the power of the slave apparatus 20X is turned on, the slave apparatus 20X performs an initialization process P1, a master apparatus detection process P2 by continuous reception, and a transmission and reception process P3 performed with the master apparatus 10. In the initialization process P1, the slave apparatus 20X reads necessary information by reading data in the ROM of the control unit 230X and initializes a RAM. In the transmission and reception process P3 performed with the master apparatus 10, the slave apparatus 20X transmits and receives a signal to and from the master apparatus 10 in conformity with the TDMA scheme, when the slave apparatus 20X recognizes that the master apparatus 10 is a registered regular master apparatus.

In the master apparatus search mode, the high number of clocks of the MPU has to be maintained (the MPU has to operate at high speed) in order to continuously transmit and receive a signal to and from the master apparatus 10, and thus the current consumption necessary in a soft process of the MPU of the control unit 230X increases. Further, in the master apparatus search mode, the current consumption in the initialization process P1 is the smallest and the current consumption in the transmission and reception process P3 is the largest. The current consumption in the transmission and reception process corresponds to, for example, average current when a signal is transmitted and received.

When information necessary for communication in the transmission and reception with the master apparatus 10 is exchanged, synchronization is established between the master apparatus 10 and the slave apparatus 20X, the slave apparatus 20X transitions from the master search mode to an intermittent reception mode in the control data is received periodically from the master apparatus 10. In the intermittent reception mode, the slave apparatus 20X performs an intermittent reception process P4 of receiving information at the timing at which the master apparatus 10 transmits the control data. The slave apparatus 20X can recognize the timing of the intermittent reception by storing the timing information of the intermittent reception in advance or acquiring the timing information from the master apparatus 10 in the transmission and reception process P3.

In the intermittent reception mode, the master apparatus 10 and the slave apparatus 20X operate in synchronization with each other. Therefore, the control unit 230 reduces the number of clocks (the MPU operates at low speed) of the MPU to the extent that the synchronization reception is possible, and thus the current consumption necessary in the soft process of the MPU of the control unit 230 is reduced. Further, even in the intermittent reception process P4, the current consumption during the reception operation is the same as the current consumption per hour necessary in the master apparatus detection process P2 in the master apparatus search mode. However, since the slave apparatus 20X recognizes the transmission timing of the master apparatus 10 in the intermittent reception process P4, the reception operation can be suppressed so as to be performed for the necessary minimum time in accordance with the transmission timing of the master apparatus 10. Therefore, the current consumption can be reduced more than that of the master apparatus detection process P2.

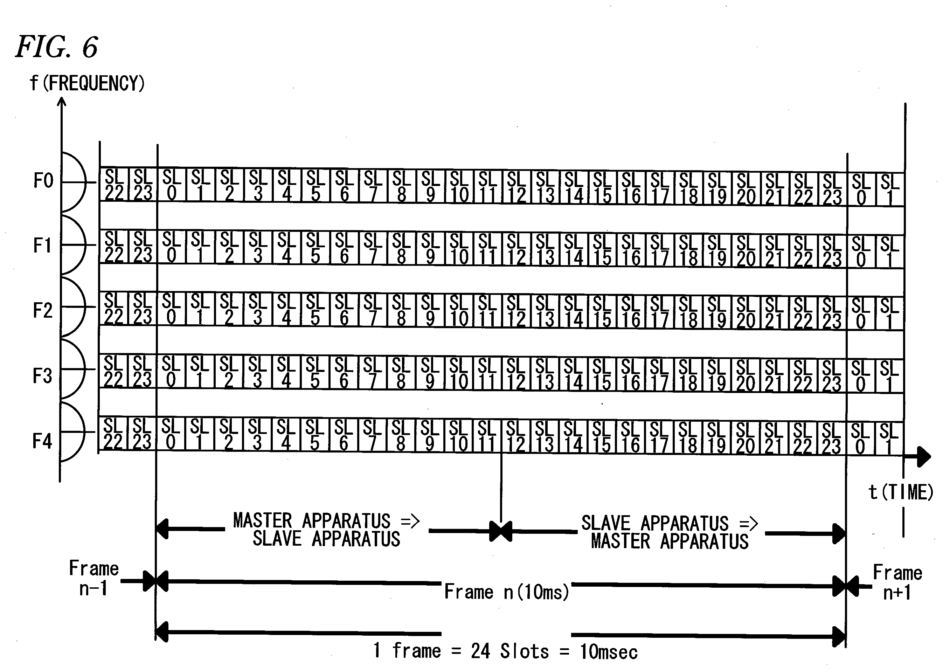

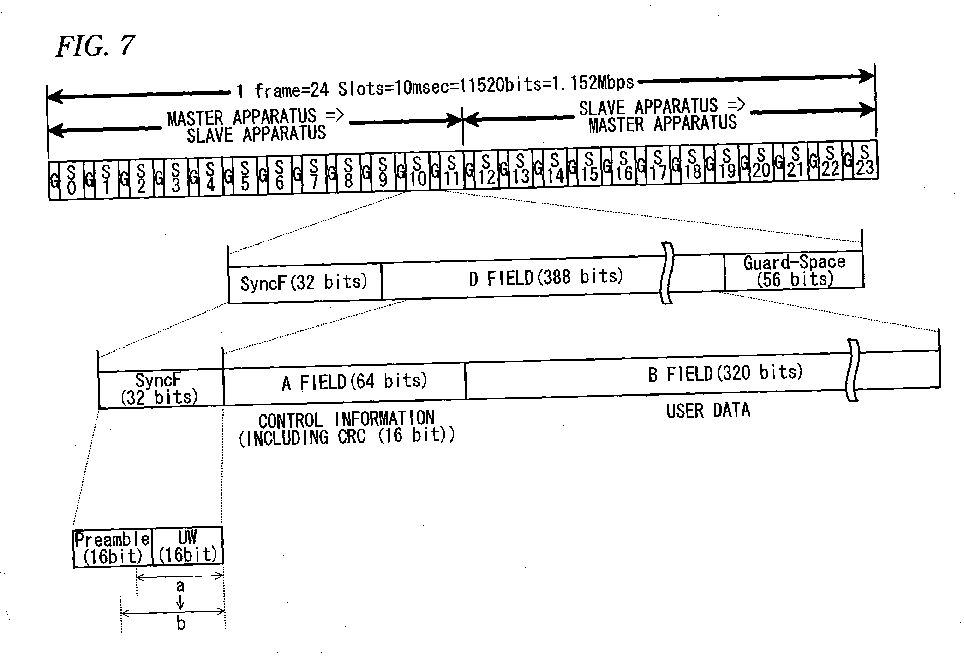

Next, the structure of a frame for the TDMA scheme used for the communication between the master apparatus 10 and the slave apparatus (the slave apparatus 20 or 20X) will be described. Figs. 6 and 7 are diagrams illustrating an example of a frame structure and a data structure used for the communication between the master apparatus 10 and the slave apparatus.

In this embodiment, as shown in Fig. 6, one frame includes 24 slots (SL0 to SL23) and a time section of this frame is, for example, 10 ms. The number of frequencies (frequency channels: F0 to F4) used to transmit a signal in each slot on the radio line 30 is, for example, five. Further, multiplexing is performed using the same frame in two-way communication. For example, SL0 to SL11 of one frame are used for communication from the master apparatus 10 to the slave apparatus and SL12 to SL23 are used for communication from the master apparatus 10 to the slave apparatus. Accordingly, in this embodiment, a TDMA/TDD (Time Division Duplex) scheme is assumed to be used.

Although not illustrated in Fig. 6, a guard space G is inserted between the slots, as shown in Fig. 7. The guard space G is a protection time in which collision between the slots is avoided. The length of the guard space G is determined in accordance with the accuracy of synchronization control. As shown in Fig. 7, the data structure of one slot is formed by a synchronization field SyncF and a data field DF.

The synchronization field SyncF includes a preamble pattern (Preamble) and a UW pattern (UW). The preamble pattern has, for example 16 bits. Both the master apparatus 10 and the slave apparatus have the same pattern. The UW pattern of the master apparatus 10 is different from that of the slave apparatus. For example, the UW pattern of the master apparatus 10 is "OxE98A" and the UW pattern of the slave apparatus is "Ox1675." In the master apparatus detection process performed by the master apparatus detection unit 220, the master apparatus 10 is detected using at least the UW pattern.

The data field DF includes an A field used to store control information and a B field used to store user data. For example, the control information includes a slot number or frequency information to be used by the slave apparatus and information on a kind of slave apparatus (whether or not the slave apparatus is a slave apparatus performing the intermittent reception process). The control information further includes information (for example, CRC information) used to perform error detection. The CRC information has, for example, 16 bits. The user data includes data body such as data of telephone call voice in the telephone call unit 270 or data detected by the sensor 260.

In the master apparatus detection process or the intermittent reception process described in Fig. 5, the slave apparatus (the slave apparatus 20X or the like having a normal voice telephone call function) normally performing the intermittent reception process intermittently receives data that includes the synchronization field SyncF and the A field transmitted as the control data by the master apparatus 10. Further, in transmission and reception processes when a telephone call starts, data including the synchronization field SyncF and the data field DF is transmitted as the user data through the radio line 30.

The number of slots, the number of bits, and the like shown in Figs. 6 and 7 are merely examples, and the invention is not limited thereto.

Next, operations of the communication system 1 will be described.

The communication system 1 performs at least one of first to fourth operations to be described below.

### First Operation

The control unit 230 of the slave apparatus 20 including the sensor 260 that detects a door opening or closing causes the master apparatus detection unit 220 to perform the master apparatus detection process by including not only the UW pattern but also the preamble pattern. The control unit 230 controls the number of bits of the preamble pattern used for the master apparatus detection process. For example, when the master apparatus 10 is detected using the UW pattern but an error is detected in the data received in one slot through CRC calculation, an error is consequently detected for the master apparatus 10. When the error is detected, the control unit 230 increases the number of bits of the preamble pattern used for the master apparatus detection process.

For example, in the communication of the frame format with a structure shown in Fig. 7, when the number of bits used for the master apparatus detection process is set to 16 bits, that is, when only 16 bits of the UW pattern are used, a probability of the error detection occurrence is 15% or more per frequency (for example, a frequency F0). On the other hand, when the number of bits used for the master apparatus detection process is set to 22 bits, that is, when 6 bits of the preamble pattern are added to 16 bits of the UW pattern to perform the master apparatus detection process, the probability of the error detection is reduced to 1/64 compared to the case in which only the bits of the UW pattern are used and is 0.5% or less per frequency (for example, the frequency F0). Thus, the probability of the error detection can be reduced by increasing the number of bits of the preamble pattern used for the master apparatus detection process.

In the master apparatus detection process, the control unit 230 of the slave apparatus 20 according to this embodiment uses not only the UW pattern but also data of the rear portion of the preamble pattern continuous from the UW pattern, as indicated by a section "a" in Fig. 7. When the control unit 230 increases the number of bits by controlling the number of bits described above, the control unit 230 increases the number of digits of the preamble pattern used for the master apparatus detection process in the front direction, as indicated by a section "b" in Fig. 7 and switches an operation so that the digits of the preamble are used from higher digits in the master apparatus detection process. However, it is not preferable that data of the first half portion of the preamble pattern is used for the master apparatus detection process. This is because the stability of bit information is lowered since the preamble pattern is the forefront pattern in the data structure of one slot. Accordingly, to increase the number of bits used for the master apparatus detection process, the data of the rear portion of the preamble pattern continuous from the UW pattern is used. Thus, by using the bits of the rear portion of the preamble pattern in the master apparatus detection process, the reliability of the detection result is improved.

### Second Operation

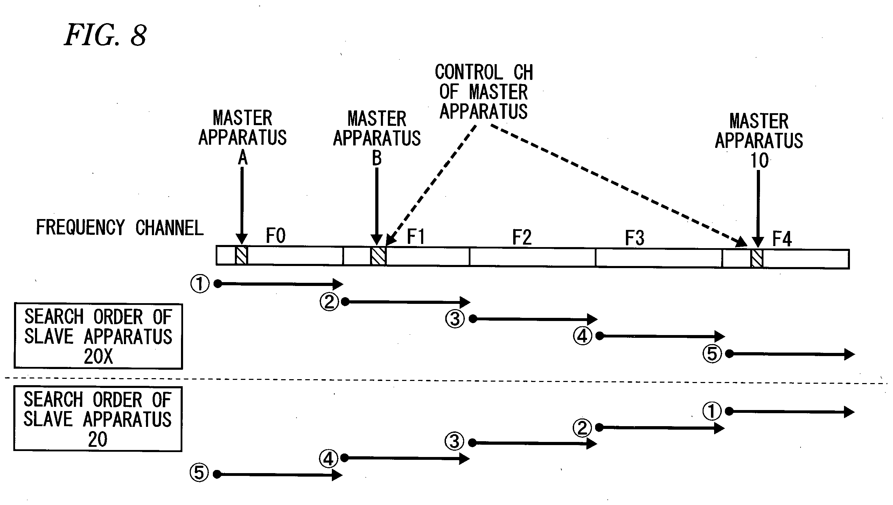

Fig. 8 is an image diagram illustrating a first example of priority of frequencies used for the master apparatus 10 to transmit control data, when the communication system 1 in which the master apparatus 10 operates is adjacent to another communication system in which another master apparatus (a master apparatus A or B in Fig. 8) operates. When the slave apparatus 20 is registered in the master apparatus 10, for example, as shown in Fig. 8, the control unit 120 of the master apparatus 10 changes the priority for determining a frequency (control CH) used to transmit the control data so that the slave apparatus 20 can detect the master apparatus 10 in a short time. When only the slave apparatus 20X that does not include the sensor 260 is registered, the priority is reversed. In the example of Fig. 8, the control unit 120 of the master apparatus 10 holds information of, for example, F0→F1→F2→F3→F4 as the priority in the frequency priority register 121 when only the slave apparatus 20X is registered. The control unit 120 holds information of, for example, F4→F3→F2→F1→F0 as the priority in the frequency priority register 121 when the slave apparatus 20 is registered. When the slave apparatus 20 is additionally registered in the state where only the slave apparatus 20X is registered, the control unit 120 of the master apparatus 10 performs a switch operation of changing the priority of the frequencies (the control CH) used to transmit the control data to the priority of F4→F3→F2→F1→F0.

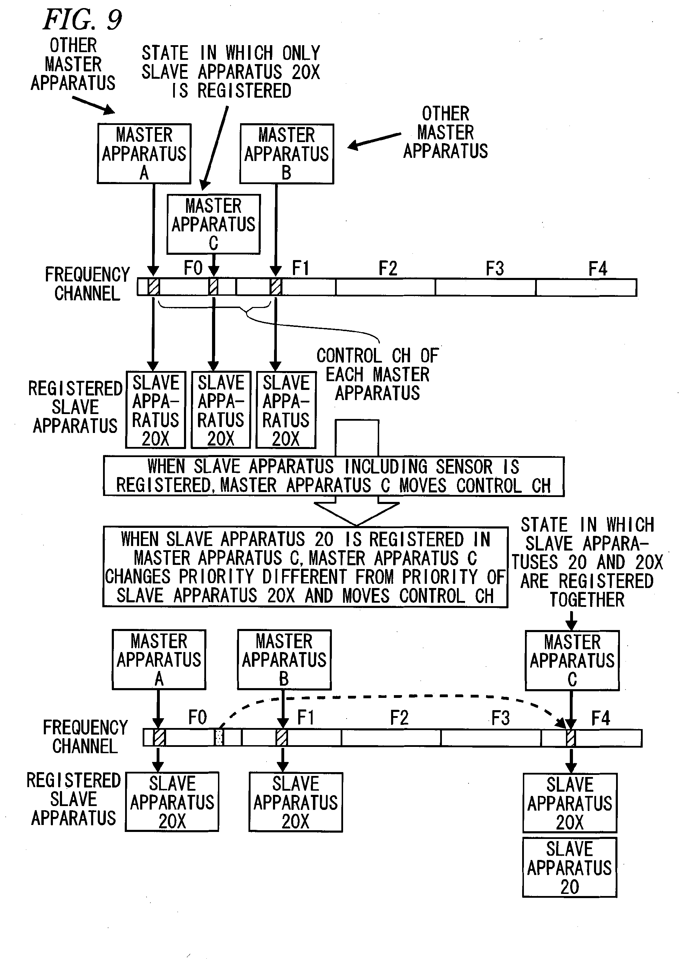

Fig. 9 is an image diagram specifically illustrating movement of the control CH of the master apparatus 10. Fig. 9 shows a case in which the master apparatus having registered only the slave apparatus 20X including no sensor determines the control CH by setting the frequency F0 to have the highest priority. In the example of Fig. 9, it is assumed that at a given time, a master apparatus A and a master apparatus C (the master apparatus 10) uses the frequency F0 as the control CH and a master apparatus B uses the frequency F1 as the control CH. When only the slave apparatus 20X is registered in the master apparatus C, the master apparatus C uses the frequency F0. However, when the slave apparatus 20 is registered in the master apparatus C, the master apparatus C changes the normal priority and moves the control CH. That is, the control CH is moved to the frequency F1 when the normal priority is used. However, when the slave apparatus 20 is registered, the normal priority is changed to the reverse priority, as described above, and thus the control CH is moved to the frequency F4.

The control unit 230 of the slave apparatus 20 sets the priority of the frequencies used to perform the master apparatus detection process to be reverse to the priority of the frequencies used for the slave apparatus 20X to perform the master apparatus detection process in accordance with the information on the priority held by the master apparatus 10. For example, when the control unit 230X of the slave apparatus 20X holds information of F0→F1→F2→F3→F4 as the information on the priority of the frequencies used to perform the master apparatus detection process, the control unit 230 of the slave apparatus 20 comprehends the priority of the frequencies held by the slave apparatus 20X in advance and holds information of F4→F3→F2→F1→F0 different from the slave apparatus 20X in the frequency priority register 234 as the information on the priority of the frequencies used to perform the master apparatus detection process.

As described above, the master apparatus 10 (the master apparatus C) having registered both the slave apparatuses 20X and 20 determines the control CH by setting the frequency F4 to have the highest priority. In the example of Fig. 9, the master apparatus 10 (the master apparatus C) uses the frequency F4. Accordingly, when the slave apparatus registered in the master apparatus C performs the master apparatus detection process in the example of Fig. 9, the slave apparatus 20X searches for the control data of the master apparatus C in the order of F0→F1→F2→F3→F4 and the slave apparatus 20 searches for the control data of the master apparatus C in the order of F4→F3→F2→F1→F0.

The priority for determining the frequency used for the master apparatus 10 having registered the slave apparatus 20 to transmit the control data is set to be different from the priority for determining the frequency used for the master apparatuses A and B having registered only the slave apparatus 20X to transmit the control data so that the control CH used for the master apparatus 10 to transmit the control data can be separated from the control CH of the other master apparatuses A and B. Accordingly, when the slave apparatus 20 searches for the control data of the master apparatus 10, the frequency channel to be used for the master apparatus 10 to transmit the control data is preferentially searched for. Therefore, it is easy to avoid the frequency channel used for the other master apparatuses A and B to transmit the control data. Thus, the number of times the slave apparatus 20 erroneously detect the control data from the other master apparatus A and B is considerably reduced. Therefore, the less the error detection occurs, the more a time necessary for the master apparatus detection process is shortened. Accordingly, the current consumption can be accordingly reduced.

The priority of the slave apparatus 20 may be held in advance instead of setting the priority of the slave apparatus 20 to be reverse to the priority of the slave apparatus 20X. In regard to the information on the priority, for example, the same priority is held when the master apparatus 10 and the slave apparatus 20 perform the registration process. That is, the master apparatus 10 holds the information on the priority in advance in the frequency priority register 121 and the slave apparatus 20 holds the information on the priority in advance in the frequency priority register 234.

For example, the control unit 120 of the master apparatus 10 holds the information of the frequencies F4→F0→F3→F2→F1 as the priority used to communicate with the slave apparatus 20 in the frequency priority register 121 of the master apparatus 10, when holding the information of the frequencies F0→>F1→F2→F3→F4 as the priority used to communicate with the slave apparatus 20X. In this case, the slave apparatus 20 holds the information on the frequencies F4→F0→F3→F2→F1 in the frequency priority register 234.

When the control unit 120 sets the frequency (control CH) at the master apparatus 10 actually transmits the control data, the control unit 120 of the master apparatus 10 sets the frequency used to communicate with the slave apparatus 20 based on the priority held in the frequency priority register 121. Further, the control unit 120 of the master apparatus 10 sets the frequency used to communicate with the slave apparatus 20X in accordance with the radio environment between the master apparatus 10 and the slave apparatus 20X. For example, the degree of interference is measured in advance for each frequency and a frequency for which the best state continues stably is recorded as the first priority in the frequency priority register 121. That is, a frequency (frequency of which a state is relatively stable) for which a signal level of another signal source (for example, an adjacent cordless telephone) detected at this frequency is low to the extent that the signal level does not exceed a predetermined allowable level, and this state is stable, is recorded as the first priority. In general, the control unit 120 of the master apparatus 10 sets the frequency with the first priority held in the frequency priority register 121 as a frequency to be used to transmit the control data. When the slave apparatus registered in the master apparatus 10 is only the slave apparatus 20X, the frequency to be used to transmit the control data is determined in accordance with the general priority.

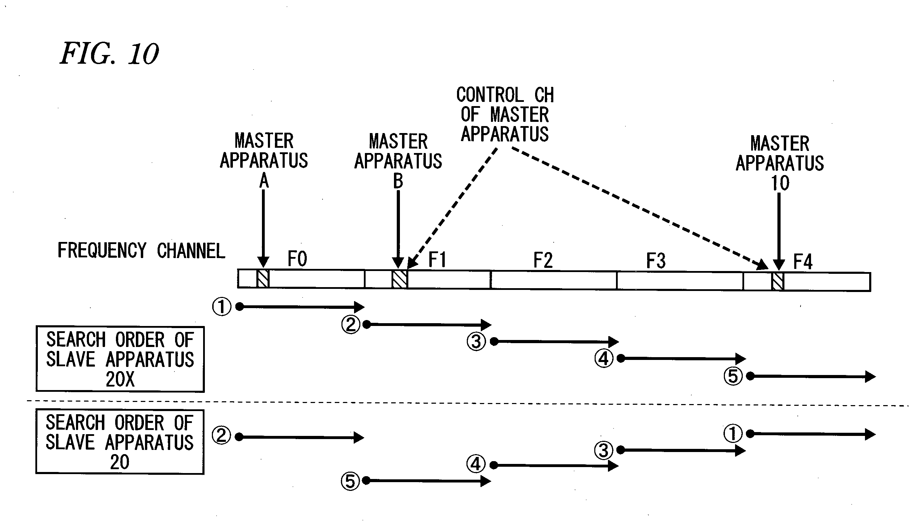

Fig. 10 is an image diagram illustrating a second example of priority for determining frequencies used for the master apparatus 10 to transmit the control data, when the communication system 1 in which the master apparatus 10 (a master apparatus C) operates is adjacent to another communication system in which another master apparatus (a master apparatus A or B) operates. In the example of Fig. 10, the master apparatuses A and B having registered only the slave apparatus 20X sets the frequency F0 as a frequency with the highest priority to determine the frequency. That is, in the example of Fig. 10, the master apparatus A uses the frequency F0 and the master apparatus B uses the frequency F1. On the other hand, the master apparatus 10 having registered both the slave apparatuses 20X and 20 sets the frequency F4 as a frequency with the highest priority to determine the frequency. In the example of Fig. 10 the master apparatus 10 uses the frequency F4.

In this case, the control unit 120 of the master apparatus 10 includes the frequency priority register 121. The frequency priority register 121 of the master apparatus 10 stores a priority different from the priority of the frequencies used to transmit the control data in the state, in which only the slave apparatus 20X is registered, as the priority of the frequencies used to transmit the control data in the state in which the slave apparatus 20 is registered. The control unit 120 of the master apparatus 10 controls the frequency channel used to transmit the control data based on this priority. On the other hand, the slave apparatus 20 includes the frequency priority register 234 as a storage unit that stores the priority of the frequencies to be used to perform the master apparatus detection process. The frequency priority register 234 of the slave apparatus 20 stores the priority different from the priority of the frequencies to be used for the slave apparatus 20X to perform the master apparatus detection process. The master apparatus detection unit 220 of the slave apparatus 20 performs the master apparatus detection process based on this priority.

Accordingly, even in this case, the frequency (control CH) used for the master apparatus 10 having registered the slave apparatus 20 to transmit the control data can be determined in priority different from the priority of the other master apparatuses A and B having registered only the slave apparatus 20X, and therefore the frequency used for the master apparatus 10 to transmit the control data can be separated from the frequencies used for the other master apparatuses A and B to transmit the control data. Further, when the slave apparatus 20 searches for the control data from the master apparatus 10, the slave apparatus 20 preferentially searches for the frequency to be used for the master apparatus 10 to transmit the control data in accordance with the priority stored in the frequency priority register 234. Therefore, since it is possible to avoid using the frequency that is used for the other master apparatuses A and B to transmit the control data and it is possible to shorten the time necessary for the master apparatus detection process by reducing the error detection, the current consumption can be reduced.

### Third Operation

When the control unit 230 performs the searching process to perform the master apparatus detection process, the control unit 230 of the slave apparatus 20 determines whether the number of other master apparatus (the master apparatuses A and B of another communication system) is equal to or greater than a predetermined number. When the control unit 230 determines that the number of master apparatuses is equal to or greater than the predetermined number, the radio unit 210 transmits a frequency change request signal to the master apparatus 10 so that the master apparatus 10 can change the frequency to be used for the communication.

When the communication unit 110 of the master apparatus 10 receives the frequency change request signal from the slave apparatus 20, the control unit 120 investigates the state of another frequency based on the information on the priority held in the frequency priority register 121 described above in the second operation and changes the lowest frequency of the other master apparatus as the frequency (control CH) to be used to transmit the control data. Thus, the master apparatus of another communication system can transmit the control data using the low frequency. Therefore, since it is possible to shorten the time in which the slave apparatus 20 detects the regular master apparatus, the current consumption can be reduced.

In response to the change in the frequency (control CH) used for the master apparatus 10 to transmit the control data, the control unit 230 of the slave apparatus 20 changes the frequency to be used to perform the master apparatus detection process based on the information on the priority held in the frequency priority register 234 described above in the second operation.

The communication unit 220 of the slave apparatus 20X may also transmit the frequency change request signal to the master apparatus 10. In this case, when the communication unit 110 of the master apparatus 10 receives the frequency change request signal from the slave apparatus 20X, the control unit 120 changes the frequency (control CH) to be used to transmit the control data based on the priority described above in the second operation and the state of the radio line 30 between the master apparatus 10 and the slave apparatus 20X. Thus, the change in the frequency can be correspondingly achieved in the communication with the slave apparatus 20 and the change in the frequency can be correspondingly achieved in the communication with the slave apparatus 20X.

### Fourth Operation

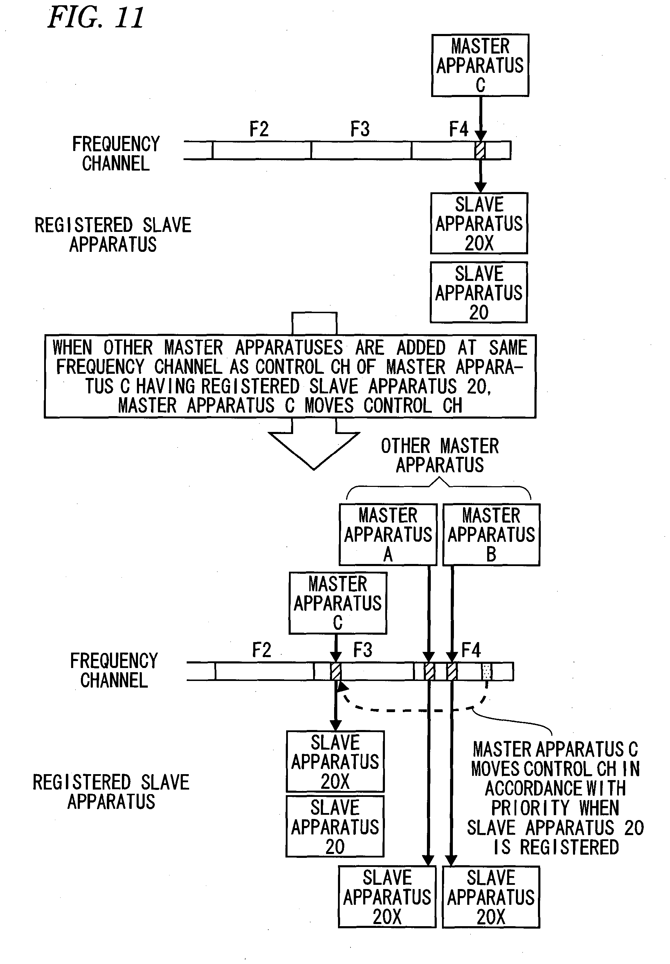

Fig. 11 is an image diagram specifically illustrating the movement of the control CH when the number of times the control data from other master apparatuses (the master apparatuses A and B of another communication system) is detected at the same frequency channel as the control CH of the master apparatus 10 registering the slave apparatus 20 increases. Fig. 11 shows an example in which the master apparatuses A and B having registered the slave apparatus 20X transmit the control data using the same frequency F4 as the control CH halfway when the master apparatus C (the master apparatus 10) having registered both the slave apparatuses 20 and 20X uses the frequency F4 as the control CH.

For example, the control unit 120 of the master apparatus 10 holds information of "3" as the predetermined number (see "Third Operation" described above) to change the frequency when three or more communication systems use the same frequency. In this case, referring to the frequency priority register 121, the master apparatus 10 (the master apparatus C in Fig. 11) changes the frequency (control CH) to be used to transmit the control data from the frequency F4 to the frequency F3. Further, referring to the frequency priority register 234, the slave apparatus 20 changes the frequency to be used to perform the master apparatus detection process from the frequency F4 to the frequency F3.

Thus, when the number of master apparatuses transmitting the control data at the same frequency channel increases, the master apparatus 10 having registered the slave apparatus 20 changes the frequency (control CH) to be used to transmit the control data from the frequency F4 to the frequency F3. When the slave apparatus registered in the master apparatus is only the slave apparatus 20X, the control CH is changed from the frequency F4 to the frequency F0. However, when the slave apparatus 20 is registered, the change order of the control CH is reversed. In the related art, when several master apparatuses are present in the frequency priority register 234, a time necessary for the process in which the slave apparatus recognizes the master apparatus is lengthened, and therefore a time necessary to perform the master lengthened, and therefore a time necessary to perform the master apparatus detection process is also lengthened. In this embodiment, however, since the time necessary to perform the master apparatus detection process can be shortened by changing the frequency (control CH) used to transmit the control data to another frequency and causing the slave apparatus 20 to preferentially search for the frequency, the current consumption can be reduced.

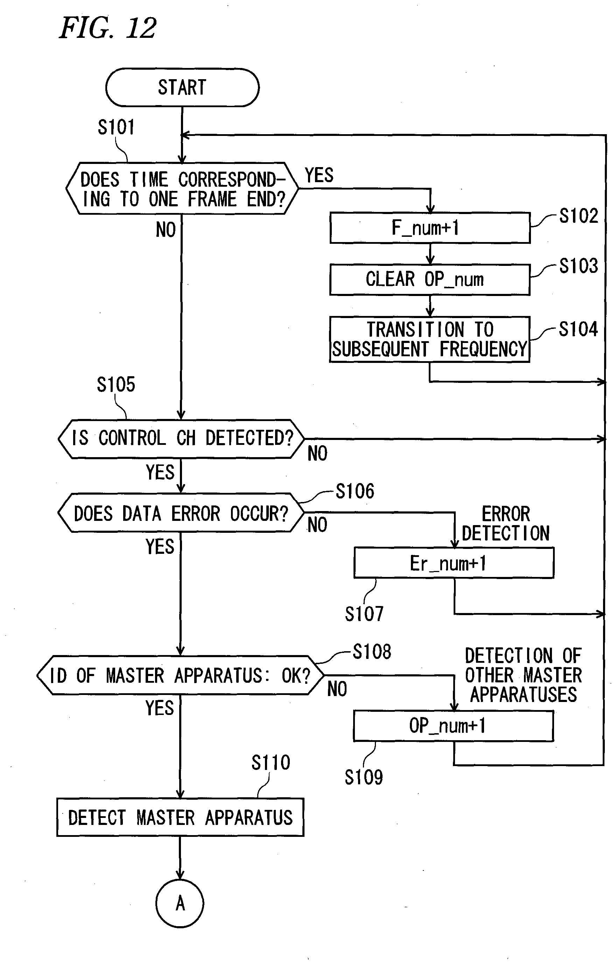

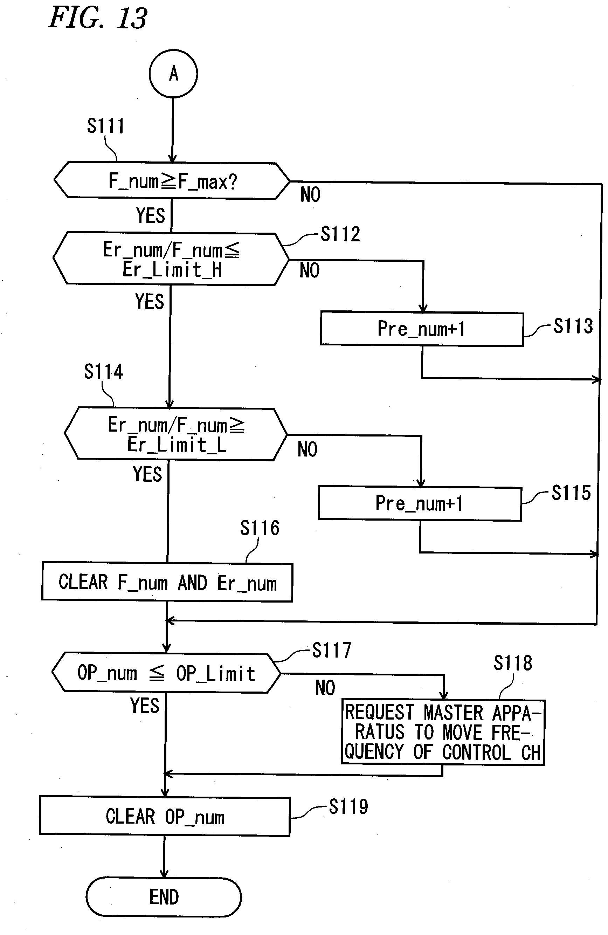

Next, operations of the slave apparatus 20 will be described in detail. Figs. 12 and 13 are flowchart illustrating examples of the operations of the slave apparatus 20. Figs. 12 and 13 show the operations of the slave apparatus 20 when the master apparatus detection process is performed, the number of bits of the preamble is controlled, and a request to change the frequency used to perform the master apparatus detection process is given. The operations include the contents of first, third, and fourth operations. The processes described in Figs. 12 and 13 are performed periodically.

First, the control unit 230 determines whether a time measured by a timer (not shown) exceeds the time corresponding to one frame shown in Fig. 6 (step S101). When the time (for example 10 ms) corresponding to one frame ends, the control unit 230 adds 1 to a variable "F_num" which handles the number of search completion frames (step S102), resets (clears) a variable "OP_num", which handles the number of times other master apparatuses are detected, to 0 (step S103), and changes the frequency used to perform the master apparatus detection process to the subsequent frequency (step S104). Then, the process returns to step S101.

Conversely, when the time corresponding to one frame does not end, the control unit 230 determines whether the master apparatus detection unit 220 detects the control data transmitted by the master apparatus, in other words, the frequency (control CH) used to communicate the control data (step S105). When the master apparatus detection unit 220 does not detect the control data transmitted by the master apparatus, the process returns to step S101.

Conversely, when the master apparatus detection unit 220 detects the control data transmitted by the master apparatus, the control unit 230 determines whether a data error occurs in the control data (step S106). Here, whether a data error occurs is determined through error detection. For example, when an error is not detected through CRC calculation, it is determined that no data error occurs. Conversely, when the data error occurs, the control unit 230 adds 1 to a variable "E_num" which handles the number of times an error is detected (step S107), and then the process returns to step S101.

When the data error does not occur, the control unit 230 determines whether the master apparatus having transmitted the control data is the regular master apparatus 10 of the corresponding slave apparatus 20 (step S108). Here, the control unit 230 determines whether the ID of the master apparatus held in the registration process of the slave apparatus 20 is identical with the ID of the master apparatus included in the A field of the signal received by the radio unit 210. When the master apparatus is not the registered regular master apparatus 10, the control unit 230 adds 1 to the variable "OP_num" which handles the number of times other master apparatuses are detected (step S109).

Conversely, when the master apparatus is the regular master apparatus 10, the slave apparatus 20 succeeds in detecting the master apparatus 10 (step S110).

After the master apparatus 10 is detected, the process proceeds to steps in Fig. 13. The control unit 230 determines whether the variable "F_num" which handles the number of search completion frames is equal to or greater than a variable "F_max" which handles the regular number of frames used to determine an error (step S111). The regular number of frames is, for example, "300." When the number of search completion frames is less than the regular number of frames, the process proceeds to step S117.

Conversely, when the number of search completion frames is equal to or greater than the regular number of frames, the control unit 230 determines whether the number (error detection number) "Er_num/F_num" of errors per one frame is less than the upper limit "Er_Limit_H" of the error detection number (step S112). The upper limit of the error detection number is, for example, "6." When the number of errors per one frame is equal to or greater than the upper limit of the error detection number, the control unit 230 adds 1 to a variable "Pre_num" which handles the number of bits of the preamble pattern referred to in the master apparatus detection process (step S113), and then the process proceeds to step S117.

Conversely, when the number of errors per one frame is less than the upper limit of the error detection number, the control unit 230 determines whether the number "Er_num/F_num" of errors per one frame is equal to or greater than the lower limit "Er_Limit_L" of the error detection number (step S114). The lower limit of the error detection number is, for example, "1." When the number of errors per one frame is less than the lower limit of the error detection number, the control unit 230 subtracts 1 from the variable "Pre_num" which handles the number of bits of the preamble pattern (step S115), and then the process proceeds to step S117.

When the number of errors per one frame is equal to or greater than the lower limit of the error detection number, the control unit 230 sets (clears) the variables "F_num" and "Er_num" to 0, and then the process proceeds to step S117 (step S116).

Then, the control unit 230 determines whether the variable "OP_num" which handles the number of times other master apparatuses are detected is less than the upper limit "OP_Limit" of the detection of other master apparatuses (step S117). When the number of times another master apparatus is detected is equal to or greater than the upper limit of the detection of the other master apparatuses, the control unit 230 requests the master apparatus 10 to move the frequency used to communicate the control data (step S118). That is, the frequency change request signal is transmitted to the master apparatus 10.

Conversely, when the number of times another master apparatus is detected is less than the upper limit of the detection of the other master apparatuses, or after the control unit 230 requests the master apparatus 10 to move the frequency, the control unit 230 sets (clears) the variable "OP_num", which handles the number of times other master apparatuses are detected, to 0 (step S119).

Thus, the number of bits of the preamble pattern used for the master apparatus detection process may be controlled based on the number of times the master apparatus 10 is erroneously detected.

Then, when the number of times of the error detection is equal to or greater than a first predetermined threshold value, the control unit 230 may increase the number of bits of the preamble pattern used for the master apparatus detection process. Here, examples of the number of times of the error detection include an error detection number and a ratio of the error detection number to the number of frames of a received signal. Thus, since the number of bits of the pattern referred to in the master apparatus detection process increases and the probability that a noise pattern or the like is identical with a master apparatus pattern decreases, the number of times of the error detection can be reduced, and thus the current consumption can be reduced.

When the number of times of the error detection is less than a second predetermined threshold value less than the first predetermined threshold value, the control unit 230 may decrease the number of bits of the preamble pattern used for the master apparatus detection process. Thus, when the number of bits of the pattern referred to in the master apparatus detection process is too large, the number of bits of the pattern to be referred to can be decreased to reduce the probability that even the master apparatus pattern of the master apparatus to be detected is subjected to error detection.

When the number of frames of the signal received by the radio unit 210 is equal to or greater than a predetermined number of frames, the control unit 230 may control the number of bits of the preamble pattern used for the master apparatus detection process. Thus, the number of bits is controlled only when the number of samples is sufficient. Therefore, the reliability of the control result is improved.

When the number of times the master apparatus of another communication system not subjected to the registration process is recognized is equal to or greater than a third predetermined number of times until the recognition of the master apparatus 10 performing the registration process, the radio unit 210 may transmit a frequency change request signal to change the frequency used to communicate the control data. Thus, since it is possible to reduce the probability that the master apparatus of another communication system is detected, the current consumption can be accordingly reduced.

When the number of times the master apparatus of another communication system not subjected to the registration process is recognized is the third predetermined number of times, the control unit 230 changes the frequency used to perform the master apparatus detection process with reference to the frequency priority register 234. Then, since the slave apparatus 20 can also change the frequency used to perform the master apparatus detection process according to master apparatus 10 and it is possible to shorten the time necessary to detect the master apparatus, the current consumption can be accordingly reduced.

### Second Embodiment

In a second embodiment, a communication apparatus 20B (hereinafter, simply referred to as a "slave apparatus 20B") operating as a slave apparatus is different from the slave apparatus 20 described in the first embodiment. Since the configuration of a master apparatus 10 is the same as that described in the first embodiment, the description thereof will not be repeated.

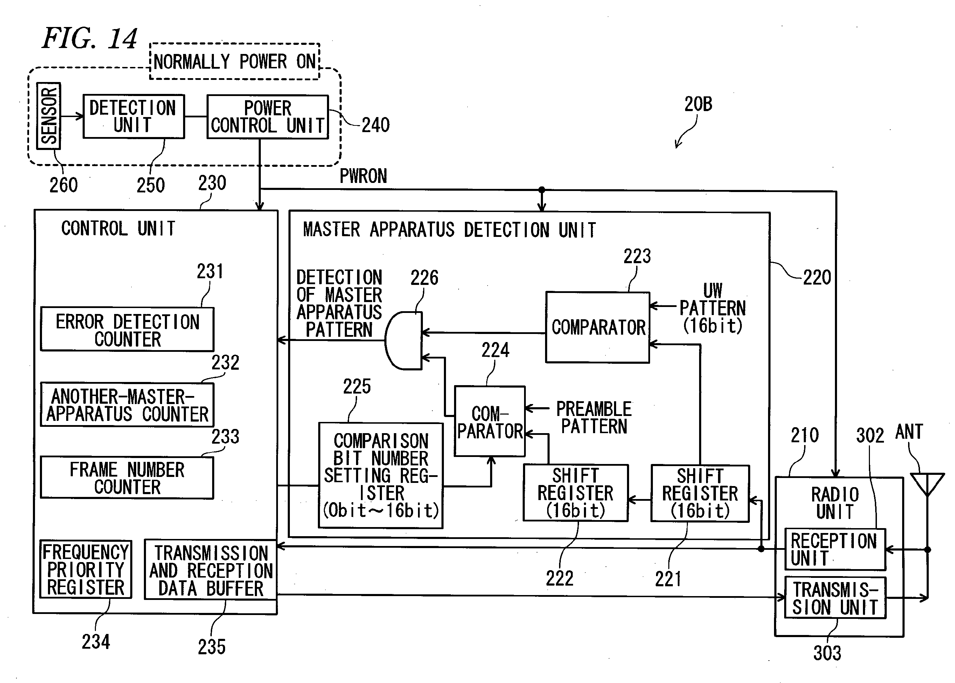

Fig. 14 is a diagram illustrating an example of the configuration of the slave apparatus 20B.

The slave apparatus 20B includes a radio unit 210, a master apparatus detection unit 220, a control unit 230, a sensor 260, a detection unit 250, and a power control unit 240, as shown in Fig. 14. Since the radio unit 210, the master apparatus detection unit 220, and the control unit 230 are the same as those described in the first embodiment, the description thereof will not be repeated.

The sensor 260 substitutes various kinds of information with electric signals by applying a mechanical property, an electromagnetic property, a thermal property, an acoustic property, a chemical property, or the like. The detection unit 250 detects various kinds of information using the sensor 260. The sensor 260 and the detection unit 250 have a function of a sensor unit that detects predetermined information. Further, open and closed states of a door can be exemplified as the information detected by the sensor 260.

The power control unit 240 is configured by a power control IC or the like and controls the power of the radio unit 210, the master apparatus detection unit 220, and the control unit 230. Specifically, when the detection unit 250 detects predetermined information using the sensor 260, the power control unit 240 controls the power of the radio unit 210, the master apparatus detection unit 220, and the control unit 230 to be turned on. When the communication unit 240 completes the communication with the master apparatus 10, the power control unit 240 controls the power of the radio unit 210, the master apparatus detection unit 220, and the control unit 230 to be turned off.

As shown in Fig. 14, the power control unit 240 transmits a power control signal (PWRON) to each unit, when the power control unit 240 controls the power of each unit to be turned on. When the power control unit 240 controls the power of each unit to be turned off, the power control unit 240 transmits a power control signal (PWROFF) to each unit (not shown).

Next, the current consumption of the slave apparatus 20B will be described.

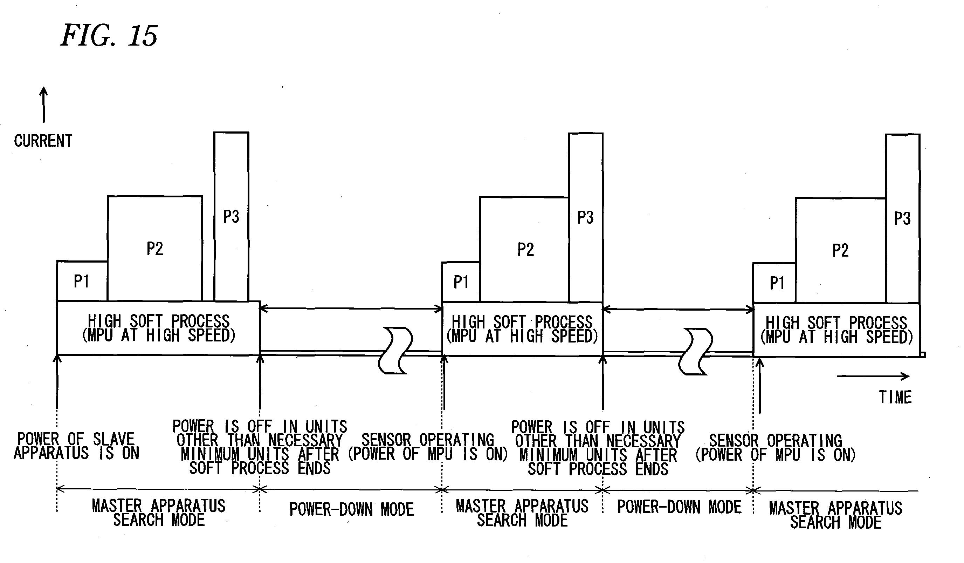

Fig. 15 is an image diagram illustrating the current consumption when the slave apparatus 20B communicates with the master apparatus 10.

As shown in Fig. 15, when the slave apparatus 20B starts communicating with the master apparatus 10, the slave apparatus 20B performs a process in the master apparatus search mode, as in the slave apparatus 20. That is, the initialization process P1, the master apparatus detection process P2, and the transmission and reception process P3 are performed.

When the transmission and reception process P3 is completed with the master apparatus 10, the slave apparatus 20B transitions from the master apparatus search mode to a power-down mode in which the units other than the minimum necessary units are turned off. In the power-down mode, the power control unit 240 of the slave apparatus 20B turns off the radio unit 210, the master apparatus detection unit 220, and the control unit 230. On the other hand, the sensor 260, the detection unit 250, and the power control unit 240 remain turned on, but the current consumption is very small. Since the sensor 260 and the like are not turned off, the sensor detection can be performed even in the power-down mode. Further, in the power-down mode, the communication with the master apparatus 10 as in the intermittent reception process P4 in the above-described intermittent reception mode is not performed. Therefore, the current consumption can be further reduced compared to the intermittent reception mode.

When the detection unit 250 detects information using the sensor 260 in the power-down mode, the power-down mode transitions to the master apparatus search mode. When the power-down mode transitions to the master apparatus search mode, the power control unit 240 of the slave apparatus 20B turns on the radio unit 210, the master apparatus detection unit 220, and the control unit 230 that have been turned off. Thus, the slave apparatus 20B can perform the initialization process P1, the master apparatus detection process P2, and the transmission and reception process P3. When the transmission and reception process P3 ends again, the slave apparatus 20B transitions from the master apparatus search mode to the power-down mode.

Accordingly, the slave apparatus 20B repeats the master apparatus search mode and the power-down mode, when information is searched using the sensor 260. In the master apparatus search mode, the slave apparatus 20B necessarily performs the master apparatus detection process. Accordingly, the slave apparatus 20B performs at least one of the first to fourth operations described in the first embodiment. Therefore, the current power is reduced in the power-down mode and the current consumption in the master apparatus detection process can be reduced in the master apparatus search mode at each time.

The sensor 260 is not normally supplied with power and has to be configured to consume small power. In particular, when the sensor has high performance, the current consumption of portions associated with the sensor 260 may increase. In the communication system according to this embodiment, the current consumption can be reduced in the master apparatus detection process. Therefore, the sensor 260 can be operated stably by reducing the number of times a battery of the sensor 260 is exchanged.

### Industrial Applicability

The invention is useful for a communication apparatus, a communication system, a communication program, and the like capable of reducing current consumption during a period of a master apparatus detection process.

### Reference Signs List

1: communication system
10: master apparatus (communication apparatus)
20, 20B, 20X: slave apparatus (communication apparatus)
30: radio line
110: radio unit
111: reception unit
112: transmission unit
120: control unit
121: frequency priority register
122: transmission and reception data buffer
130: line control unit
210: radio unit
211: reception unit
212: transmission unit
220, 220X: master apparatus detection unit
221, 222: shift register
223, 224: comparator
225: comparison bit number setting register
226: master apparatus pattern detection circuit
230, 230X: control unit
231: error detection counter
232: another-master-apparatus counter
233: frame number counter
234: frequency priority register
235: transmission and reception data buffer
240: power control unit
250: detection unit
260: sensor
270: telephone call unit
ANT: antenna

## Claims

1. A communication apparatus (20, 20B), comprising:
a communication unit (210) that communicates a signal with another communication apparatus (10); and
a master apparatus detection unit (220), the master apparatus detection unit (220), in case of the communication apparatus operating as a slave apparatus (20), performing a master apparatus detection process of detecting a communication apparatus (10) operating as a master apparatus using at least a synchronization pattern (UW) included in the signal received by the communication unit (210);
**characterized by**
a control unit (230) that controls the number of bits of a signal pattern, which is used for the master apparatus detection process together with the synchronization pattern (UW), in the signal pattern existing before the synchronization pattern (UW) in the signal received from the master apparatus (10) based on the result of the master apparatus detection process performed by the master apparatus detection unit (220), the bits of the signal pattern being closest to the synchronization pattern (UW),
wherein the communication unit (210) communicates the signal in conformity with a TDMA,Time Division Multiple Access, scheme.

2. The communication apparatus (20, 20B) according to claim 1, wherein the control unit (230) controls the number of bits of the signal pattern used for the master apparatus detection process based on the number of times the master apparatus detection unit (220) erroneously detects the communication apparatus (10) operating as the master apparatus.

3. The communication apparatus (20, 20B) according to claim 2, wherein the control unit (230) increases the number of bits of the signal pattern used for the master apparatus detection process, when the number of times of the error detection is equal to or greater than a first predetermined number of times.

4. The communication apparatus (20, 20B) according to claim 2, wherein the control unit (230) decreases the number of bits of the signal pattern used for the master apparatus detection process, when the number of times of the error detection is less than a second predetermined number of times less than a first predetermined number of times.

5. The communication (20, 20B) apparatus according to any one of claims 2 to 4, wherein the control unit (230) controls the number of bits of the signal pattern used in the master apparatus detection process, when the number of frames received by the communication unit (210) is equal to or greater than a predetermined number of frames.

6. The communication apparatus (20, 20B) according to any one of claims 2 to 5, wherein the control unit (230) controls the number of bits immediately before the synchronization pattern (UW) among bits of the signal pattern.

7. The communication apparatus (20, 20B) according to any one of claims 1 to 6, wherein the synchronization pattern (UW) for the master apparatus detection process is "OxE98A" .

8. The communication apparatus (20B) according to any one of claims 1 to 7, further comprising:
a sensor unit (260) that detects predetermined information; and
a power control unit (240) that controls powers of the communication unit (210), the master apparatus detection unit (220), and the control unit (230),
wherein the power control unit (240) controls the communication unit (210), the master apparatus detection unit (220), and the control unit (230) such that the powers of the communication unit (210), the master apparatus detection unit (220), and the control unit (230) are turned on when the sensor unit (260) detects the predetermined information, whereas controlling the master apparatus detection unit (220), the communication unit (210), and the control unit (230) such that the powers of the master apparatus detection unit (220), the communication unit (210), and the control unit (230) are turned off when the communication unit (210) completes the communication with the communication apparatus (20B) operating as the master apparatus.

9. A communication system (1) comprising:
a first communication apparatus (20) according to claim 1 that operates as a first slave apparatus;
a second communication apparatus (20X) that operates as a second slave apparatus; and
a third communication apparatus (10) that operates as a master apparatus,
wherein the second communication apparatus (20X) includes
a second communication unit (210) that communicates a signal with another communication apparatus in conformity with the TDMA, Time Division Multiple Access, and
a second master apparatus detection unit (220X) that performs the master apparatus detection process of detecting the third communication apparatus using a synchronization pattern (UW) included in the signal received by the second communication unit (210).

10. A communication method in a communication apparatus (20, 20B), comprising the steps of:
communicating a signal with another communication apparatus (10); and
performing a master apparatus detection process, the master apparatus detection process, in case of the communication apparatus operating as a slave apparatus, detecting a communication apparatus operating as a master apparatus using at least a synchronization pattern (UW) included in the received signal;
**characterized by**
controlling the number of bits of a signal pattern, which is used for the master apparatus detection process together with the synchronization pattern (UW), in the signal pattern existing before the synchronization pattern (UW) in the signal received from the master apparatus based on the result of the master apparatus detection process, the bits of the signal being closest to the synchronization pattern (UW),
wherein the communicating of the signal is performed in conformity with TDMA , Time Division Multiple Access.

11. A computer program causing a computer to execute each step of the communication method according to claim 10.

## Patentansprüche

1. Kommunikationsvorrichtung (20, 20B), mit:
einer Kommunikationseinheit (210), die ein Signal mit einer anderen Kommunikationsvorrichtung (10) kommuniziert, und
einer Master-Vorrichtungserfassungseinheit (220), wobei die Master-Vorrichtungserfassungseinheit (220) in dem Fall, dass die Kommunikationsvorrichtung als eine Slave-Vorrichtung (20) arbeitet, einen Master-Vorrichtungserfassungsprozess des Erfassens einer Kommunikationsvorrichtung (10), die als eine Master-Vorrichtung arbeitet, unter Verwendung wenigstens eines Synchronisationsmusters (UW) durchführt, das in dem Signal enthalten ist, das von der Kommunikationseinheit (210) empfangen wird,
**gekennzeichnet durch**
eine Steuereinheit (230), die auf Basis des Ergebnisses des Master-Vorrichtungserfassungsprozesses, der von der Master-Vorrichtungserfassungseinheit (220) durchgeführt wurde, die Zahl an Bits eines Signalmuster, das für den Master-Vorrichtungserfassungsprozess zusammen mit dem Synchronisationsmuster (UW) verwendet wird, in dem Signalmuster steuert, das vor dem Synchronisationsmuster (UW) in dem Signal existiert, das von der Master-Vorrichtung (10) empfangen wurde, wobei die Bits des Signalmusters am Nächsten zu dem Synchronisationsmuster (UW) sind,
wobei die Kommunikationseinheit (210) das Signal gemäß einem TDMA-Schema, Time Division Multiple Access, kommuniziert.

2. Kommunikationsvorrichtung (20, 20B) nach Anspruch 1, wobei die Steuereinheit (230) die Zahl an Bits in dem Signalmuster, das für den Master-Vorrichtungserfassungsprozess verwendet wird, auf Basis der Zahl an Malen steuert, die die Master-Vorrichtungserfassungseinheit (220) die als die Master-Vorrichtung arbeitende Kommunikationsvorrichtung (10) fehlerhaft erfasst.

3. Kommunikationsvorrichtung (20, 20B) nach Anspruch 2, wobei die Steuereinheit (230) die Zahl an Bits des Signalmusters, das für den Master-Vorrichtungserfassungsprozess verwendet wird, erhöht, wenn die Zahl an Malen der Fehlererfassung gleich oder größer als eine erste vorbestimmte Zahl an Malen ist.

4. Kommunikationsvorrichtung (20, 20B) nach Anspruch 2, wobei die Steuereinheit (230) die Zahl an Bits des Signalmusters, das für den Master-Vorrichtungserfassungsprozess verwendet wird, verringert, wenn die Zahl an Malen der Fehlererfassung geringer als eine zweite vorbestimmte Zahl an Malen ist, die geringer als eine erste vorbestimmte Zahl an Malen ist.

5. Kommunikationsvorrichtung (20, 20B) nach einem der Ansprüche 2 bis 4, wobei die Steuereinheit (230) die Zahl an Bits des Signalmusters, das bei dem Master-Vorrichtungserfassungsprozess verwendet wird, steuert, wenn die Zahl an Frames, die von der Kommunikationseinheit (210) empfangen wurden, gleich oder größer als eine vorbestimmte Zahl an Frames ist.

6. Kommunikationsvorrichtung (20, 20B) nach einem der Ansprüche 2 bis 5, wobei die Steuereinheit (230) aus den Bits des Signalmusters die Zahl an Bits unmittelbar vor dem Synchronisationsmuster (UW) steuert.

7. Kommunikationsvorrichtung (20, 20B) nach einem der Ansprüche 1 bis 6, wobei das Synchronisationsmuster (UW) für den Master-Vorrichtungserfassungsprozess "O-xE98A" ist.

8. Kommunikationsvorrichtung (20B) nach einem der Ansprüche 1 bis 7, ferner mit:
einer Sensoreinheit (260), die vorbestimmte Information erfasst, und
einer Leistungssteuereinheit (240), die Leistungen der Kommunikationseinheit (210), der Master-Vorrichtungserfassungseinheit (220) und der Steuereinheit (230) steuert,
wobei die Leistungssteuereinheit (240) die Kommunikationseinheit (210), die Master-Vorrichtungserfassungseinheit (220) und die Steuereinheit (230) derart steuert, dass die Leistungen der Kommunikationseinheit (210), der Master-Vorrichtungserfassungseinheit (220) und der Steuereinheit (230) eingeschaltet werden, wenn die Sensoreinheit (260) die vorbestimmte Information erfasst, wobei ein Steuern der Master-Vorrichtungserfassungseinheit (220), der Kommunikationseinheit (210) und der Steuereinheit (230) derart erfolgt, dass die Leistungen der Master-Vorrichtungserfassungseinheit (220), der Kommunikationseinheit (210) und der Steuereinheit (230) ausgeschaltet werden, wenn die Kommunikationseinheit (210) die Kommunikation mit der Kommunikationsvorrichtung (20B), die als die Master-Vorrichtung arbeitet, beendet.

9. Kommunikationssystem (1), mit:
einer ersten Kommunikationsvorrichtung (20) nach Anspruch 1, die als eine erste Slave-Vorrichtung arbeitet,
einer zweiten Kommunikationsvorrichtung (20X), die als eine zweite Slave-Vorrichtung arbeitet, und
einer dritten Kommunikationsvorrichtung (10), die als eine Master-Vorrichtung arbeitet,
wobei die zweite Kommunikationsvorrichtung (20X) umfasst:
eine zweite Kommunikationseinheit (210), die ein Signal mit einer anderen Kommunikationsvorrichtung gemäß TDMA, Time Division Multiple Access, kommuniziert, und
eine zweite Master-Vorrichtungserfassungseinheit (220X), die den Master-Vorrichtungserfassungsprozess des Erfassens der dritten Kommunikationsvorrichtung unter Verwendung eines Synchronisationsmusters (UW) durchführt, das in dem Signal enthalten ist, das von der zweiten Kommunikationseinheit (210) empfangen wurde.

10. Kommunikationsverfahren in einer Kommunikationsvorrichtung (20, 20B) mit den Schritten:
Kommunizieren eines Signals mit einer anderen Kommunikationsvorrichtung (10) und
Durchführen eines Master-Vorrichtungserfassungsprozesses, wobei der Master-Vorrichtungserfassungsprozess in dem Fall, dass die Kommunikationsvorrichtung als eine Slave-Vorrichtung arbeitet, unter Verwendung wenigstens eines Synchronisationsmusters (UW), das in dem empfangenden Signal enthalten ist, eine Kommunikationsvorrichtung erfasst, die als eine Master-Vorrichtung arbeitet,
**gekennzeichnet durch**
Steuern der Zahl an Bits eines Signalmusters, das für den Master-Vorrichtungserfassungsprozess zusammen mit dem Synchronisationsmuster (UW) verwendet wird, in dem Signalmuster, das vor dem Synchronisationsmuster (UW) in dem Signal existiert, das von der Master-Vorrichtung empfangen wurde, auf Basis des Ergebnisses des Master-Vorrichtungserfassungsprozesses, wobei die Bits des Signals am Nächsten zu dem Synchronisationsmuster (UW) sind,
wobei das Kommunizieren des Signals gemäß TDMA, Time Division Multiple Access, durchgeführt wird.

11. Computerprogramm, das einen Computer veranlasst, einen jeden Schritt des Kommunikationsverfahrens gemäß Anspruch 10 auszuführen.

## Revendications

1. Dispositif de communication (20, 20B) comprenant:
une unité de communication (210) qui communique un signal avec un autre dispositif de communication (10), et
une unité de détection de dispositif maître (220), ladite unité de détection de dispositif maître (220) mettant en oeuvre, dans le cas où le dispositif de communication fonctionne en tant que dispositif esclave (20), un processus de détection de dispositif maître consistant à détecter un dispositif de communication (10) fonctionnant en tant que dispositif maître, en utilisant au moins un motif de synchronisation (UW) inclus dans le signal reçu par l'unité de communication (210),
**caractérisé par**
une unité de commande (230) qui commande, sur la base du résultat du processus de détection de dispositif maître mis en oeuvre par l'unité de détection de dispositif maître (220), le nombre de bits d'un motif de signal qui est utilisé pour le processus de détection de dispositif maître conjointement avec le motif de synchronisation (UW), dans le motif de signal existant avant le motif de synchronisation (UW) dans le signal reçu dudit dispositif maître (10), les bits du motif de signal étant le plus près du motif de synchronisation (UW),
dans lequel ladite unité de communication (210) communique le signal selon un schéma TDMA, Time Division Multiple Access.

2. Dispositif de communication (20, 20B) selon la revendication 1, dans lequel l'unité de commande (230) commande le nombre de bits du motif de signal utilisé pour le processus de détection de dispositif maître, sur la base du nombre de fois que l'unité de détection de dispositif maître (230) détecte de manière erronée le dispositif de communication (10) fonctionnant en tant que dispositif maître.

3. Dispositif de communication (20, 20B) selon la revendication 2, dans lequel l'unité de commande (230) augmente le nombre de bits du motif de signal utilisé pour le processus de détection de dispositif maître, lorsque le nombre de fois de la détection d'erreur est égal ou supérieur à un premier nombre prédéterminé de fois.

4. Dispositif de communication (20, 20B) selon la revendication 2, dans lequel l'unité de commande (230) diminue le nombre de bits du motif de signal utilisé pour le processus de détection de dispositif maître, lorsque le nombre de fois de la détection d'erreur est inférieur à un deuxième nombre prédéterminé de fois inférieur à un premier nombre prédéterminé de fois.

5. Dispositif de communication (20, 20B) selon l'une quelconque des revendications 2 à 4, dans lequel l'unité de commande (230) commande le nombre de bits du motif de signal utilisé dans le processus de détection de dispositif maître, lorsque le nombre de trames reçues par l'unité de communication (210) est égal ou supérieur à un nombre prédéterminé de trames.

6. Dispositif de communication (20, 20B) selon l'une quelconque des revendications 2 à 5, dans lequel l'unité de commande (230) commande le nombre de bits immédiatement avant le motif de synchronisation (UW), parmi les bits du motif de signal.

7. Dispositif de communication (20, 20B) selon l'une quelconque des revendications 1 à 6, dans lequel le motif de synchronisation (UW) pour le processus de détection de dispositif maître est "OxE98A".

8. Dispositif de communication (20B) selon l'une quelconque des revendications 1 à 7, comprenant en outre:
une unité à capteur (260) qui détecte de l'information prédéterminée, et
une unité de commande de puissance (240) qui commande des puissances de l'unité de communication (210), de l'unité de détection de dispositif maître (220) et de l'unité de commande (230),
dans lequel l'unité de commande de puissance (240) commande l'unité de communication (210), l'unité de détection de dispositif maître (220) et l'unité de commande (230) de telle manière que les puissances de l'unité de communication (210), de l'unité de détection de dispositif maître (220) et de l'unité de commande (230) sont allumées lorsque l'unité à capteur (260) détecte l'information prédéterminée, une commande de l'unité de détection de dispositif maître (220), de l'unité de communication (210) et de l'unité de commande (230) se faisant de telle manière que les puissances de l'unité de détection de dispositif maître (220), de l'unité de communication (210) et de l'unité de commande (230) sont éteintes lorsque l'unité de communication (210) termine la communication avec le dispositif de communication (20B) fonctionnant en tant que dispositif maître.

9. Système de communication (1) comprenant:
un premier dispositif de communication (20) selon la revendication 1, qui fonctionne en tant que premier dispositif esclave,
un deuxième dispositif de communication (20X) qui fonctionne en tant que deuxième dispositif esclave, et
un troisième dispositif de communication (10) qui fonctionne en tant que dispositif maître,
dans lequel le deuxième dispositif de communication (20X) comprend
une deuxième unité de communication (210) qui communique un signal avec un autre dispositif de communication selon le TDMA, Time Division Multiple Access, et
une deuxième unité de détection de dispositif maître (220X) qui met en oeuvre le processus de détection de dispositif maître consistant à détecter le troisième dispositif de communication en utilisant un motif de synchronisation (UW) inclus dans le signal reçu par ladite deuxième unité de communication (210).

10. Procédé de communication dans un dispositif de communication (20, 20B), comprenant les étapes consistant à:
communiquer un signal avec un autre dispositif de communication (10), et
mettre en oeuvre un processus de détection de dispositif maître; dans le cas où le dispositif de communication fonctionne en tant que dispositif esclave, ledit processus de détection de dispositif maître détectant un dispositif de communication fonctionnant en tant que dispositif maître, en utilisant au moins un motif de synchronisation (UW) inclus dans le signal reçu,
**caractérisé par**
la commande du nombre de bits d'un motif de signal qui est utilisé pour le processus de détection de dispositif maître conjointement avec le motif de synchronisation (UW), dans le motif de signal existant avant le motif de synchronisation (UW) dans le signal reçu dudit dispositif maître, sur la base du résultat du processus de détection de dispositif maître, les bits du signal étant le plus près du motif de synchronisation (UW),
dans lequel la communication du signal est réalisée selon le TDMA, Time Division Multiple Access.

11. Programme d'ordinateur amenant un ordinateur à exécuter chaque étape du procédé de communication selon la revendication 10.
